# FASCICULE DE BREVET EUROPEEN

(11) **EP 2 964 472 B1**
(45) Date de publication et mention de la délivrance du brevet: **29.03.2017**
(21) Numéro de dépôt: 14708829.8
(22) Date de dépôt: 27.02.2014
(51) Int. Cl.: B60C 1/00, B32B 25/08, B32B 25/14, B60C 5/14

(54) **STRATIFIE MULTICOUCHE POUR PNEUMATIQUE**
MEHRSCHICHTIGES LAMINAT FÜR REIFEN
MULTILAYER LAMINATE FOR TYRES

(30) Priorité: 05.03.2013 FR 1351936; 22.03.2013 FR 1352559
(43) Date de publication de la demande: 13.01.2016
(73) Titulaire: Compagnie Générale des Etablissements Michelin, 63000 Clermont-Ferrand (FR); Michelin Recherche et Technique S.A., 1763 Granges-Paccot (CH)
(72) Inventeur: GREIVELDINGER, Marc, 63040 Clermont-Ferrand Cedex 9 (FR); GAUTHIER, Catherine, F-63040 Clermont-Ferrand Cedex 9 (FR); TRIGUEL, Aurélie, F-63040 Clermont-Ferrand Cedex 9 (FR)
(74) Mandataire: Sidhu, Alban
(86) Numéro de dépôt international: PCT/EP2014/053800
(87) Numéro de publication internationale: WO 2014/135430

(56) Documents cités:
- WO-A1-2011/131560
- WO-A1-2012/077372
- FR-A1- 2 917 010
- FR-A1- 2 939 076
- FR-A1- 2 955 588
- US-A1- 2012 024 447

## Description

La présente invention est relative aux stratifiés pour pneumatiques comportant une composition étanche dont les élastomères sont majoritairement des élastomères thermoplastiques à blocs polystyrène et polyisobutylène, dans une de leurs couches élastomériques.

Dans un pneumatique conventionnel les différentes couches élastomériques sont constituées de compositions d'élastomères diéniques, adhérant les unes aux autres par les liaisons créées lors de la réticulation desdits élastomères. Ces couches doivent donc être associées avant la cuisson (ou la réticulation) afin de permettre leur adhésion.

Il est d'intérêt aujourd'hui pour les fabricants de pneumatique, d'utiliser des couches élastomériques étanches comprenant, à titre d'élastomères, majoritairement des élastomères thermoplastiques à blocs polystyrène et polyisobutylène afin de bénéficier des propriétés de ces élastomères, notamment pour l'étanchéité, la réduction de la résistance au roulement et la facilité de mise en oeuvre.

La difficulté de l'utilisation de telles couches, dont les élastomères sont majoritairement des élastomères thermoplastiques styréniques (TPS), en particulier les copolymères à blocs polystyrène et polyisobutylène, est leur adhésion aux couches diéniques adjacentes de composition conventionnelle, et ce, avant la cuisson du stratifié résultant ou après la cuisson de la couche adjacente à la couche dont les élastomères sont majoritairement des copolymères à blocs polystyrène et polyisobutylène.

Afin d'améliorer cette adhésion, les demanderesses ont précédemment décrit des stratifiés pour pneumatique comportant une couche dont les élastomères sont majoritairement des élastomères thermoplastiques à blocs polystyrène et polyisobutylène, par exemple dans le document WO2010/063427. Dans ce document, la couche majoritairement composée de copolymères à blocs polystyrène et polyisobutylène, peut adhérer à une couche diénique par la présence d'une couche adhésive spécifique intermédiaire. S'il est efficace, le stratifié résultant ajoute une couche supplémentaire dans la structure du pneumatique, ce qui l'alourdit et ajoute une étape dans sa fabrication.

Dans le but d'améliorer les pneumatiques conventionnels par l'utilisation d'une couche étanche majoritairement à base d'un élastomère thermoplastique à blocs polystyrène et polyisobutylène, tout en simplifiant l'adhésion d'une telle couche à une couche diénique adjacente, réticulée ou non réticulée, la demanderesse a trouvé de manière surprenante le stratifié de l'invention.

L'invention a donc pour objet un stratifié élastomérique étanche pour pneumatique, ledit stratifié comportant au moins deux couches adjacentes d'élastomère :
o une première couche, constituée d'une composition à base d'au moins un élastomère thermoplastique à blocs polystyrène et polyisobutylène, le taux d'élastomère thermoplastique à blocs polystyrène et polyisobutylène étant compris dans un domaine allant de plus de 50 à 100 pce (parties en poids pour 100 parties en poids d'élastomère), et d'un système plastifiant comprenant de 1 à 40 pce d'une huile plastifiante et de 1 à 40 pce d'une résine hydrocarbonée, le taux total de plastifiant étant compris dans un domaine allant de 2 à 70 pce ;
o une deuxième couche, constituée d'une composition à base d'au moins un élastomère diénique, le taux d'élastomère diénique étant compris dans un domaine allant de plus de 50 à 95 pce, et d'au moins un élastomère thermoplastique styrénique (TPS), le taux d'élastomère thermoplastique styrénique étant compris dans un domaine allant de 5 à moins de 50 pce.

La présence, dans les deux couches d'élastomère thermoplastique styrénique (TPS), dont le copolymère à blocs polystyrène et polyisobutylène dans la couche étanche, permet d'avoir une adhésion satisfaisante entre les deux couches du stratifié étanche de l'invention. Par rapport aux solutions de l'art antérieur, l'invention est d'une grande simplicité puisqu'elle permet de s'affranchir d'une couche intermédiaire dont la seule fonction serait l'adhésion de la couche étanche comprenant le copolymère à blocs polystyrène et polyisobutylène sur la couche diénique et ainsi de ne pas alourdir le pneumatique et donc de ne pas augmenter sa résistance au roulement.

Un autre avantage majeur de l'invention est de permettre une économie de matériaux puisque qu'au lieu d'utiliser une couche élastomérique supplémentaire pour l'adhésion, l'invention permet à une couche majoritairement diénique (comme les compositions des pneumatiques conventionnels) d'adhérer à une couche étanche comprenant un copolymère à blocs polystyrène et polyisobutylène. Cette économie est par ailleurs très favorable à la préservation de l'environnement.

De plus, la formulation des couches de ce stratifié permet une fabrication post cuisson, c'est-à-dire une application de la première couche du stratifié sur la deuxième couche après cuisson de cette dernière. Ainsi par exemple, la première couche, peut être appliquée sur la deuxième couche, après cuisson d'un pneumatique muni de ladite deuxième couche comme couche radialement interne du pneumatique ; en particulier, cette application de la première couche est possible sans qu'aucun traitement ne soit nécessaire sur la deuxième couche.

De préférence, l'invention concerne un stratifié tel que défini ci-dessus, dans lequel le copolymère à blocs polystyrène et polyisobutylène de la première couche est un copolymère styrène/ isobutylène/ styrène (SIBS).

De préférence également, l'invention concerne un stratifié tel que défini ci-dessus, dans lequel le taux d'élastomère thermoplastique à blocs polystyrène et polyisobutylène dans la composition de la première couche est compris dans un domaine allant de 70 à 100 pce ; plus préférentiellement, de 80 à 100 pce.

Préférentiellement, l'invention concerne un stratifié tel que défini ci-dessus, dans lequel l'élastomère thermoplastique est le seul élastomère de la première couche.

De manière préférentielle, l'invention concerne un stratifié tel que défini ci-dessus, dans lequel le système plastifiant de la première couche comprend de 2 à 30 pce, et de préférence de 5 à 20 pce d'une huile plastifiante.

De manière préférentielle également, l'invention concerne un stratifié tel que défini ci-dessus, dans lequel l'huile plastifiante de la première couche est choisie dans le groupe constitué par les huiles polyoléfiniques, les huiles paraffiniques, les huiles naphténiques, les huiles aromatiques, les huiles minérales et les mélanges de ces huiles. Préférentiellement, l'huile plastifiante de la première couche est une huile polybutène, et préférentiellement une huile polyisobutylène.

Préférentiellement, l'invention concerne un stratifié tel que défini ci-dessus, dans lequel le système plastifiant de la première couche comprend de 2 à 30 pce, et de préférence de 5 à 20 pce de résine hydrocarbonée.

De préférence, l'invention concerne un stratifié tel que défini ci-dessus, dans lequel la résine hydrocarbonée de la première couche est choisie dans le groupe constitué par les résines d'homopolymère ou copolymère de cyclopentadiène ou dicyclopentadiène, les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Préférentiellement, la résine hydrocarbonée de la première couche est choisie dans le groupe constitué par les résines de copolymère de deux monomères vinylaromatiques différents, (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines. Plus préférentiellement, la résine hydrocarbonée de la première couche est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, les résines de copolymère styrène/ alphaméthylstyrène, et les mélanges de ces résines. Très préférentiellement, la résine hydrocarbonée de la première couche est une résine de copolymère styrène/ alphaméthylstyrène.

De manière préférentielle, l'invention concerne un stratifié tel que défini ci-dessus, dans lequel le taux total de plastifiant est compris dans un domaine allant de 5 à 45 pce. Préférentiellement, le taux total de plastifiant est compris dans un domaine allant de 10 à 35 pce.

Préférentiellement également, l'invention concerne un stratifié tel que défini ci-dessus, dans lequel la première couche comprend en outre une charge lamellaire.

De préférence, l'invention concerne un stratifié tel que défini ci-dessus, dans lequel la première couche ne contient pas de système de réticulation.

De manière préférentielle, l'invention concerne un stratifié tel que défini ci-dessus, dans lequel les blocs élastomères des élastomères thermoplastiques styréniques (TPS) de la deuxième couche sont choisis parmi les élastomères ayant une température de transition vitreuse inférieure à 25°C.

De manière préférentielle également, l'invention concerne un stratifié tel que défini ci-dessus, dans lequel les blocs élastomères des élastomères thermoplastiques styréniques (TPS) de la deuxième couche sont choisis dans le groupe constitué par les élastomères éthyléniques, les élastomères diéniques et leurs mélanges. Selon un mode préférentiel, les blocs élastomères des élastomères thermoplastiques styréniques (TPS) de la deuxième couche sont choisis parmi les élastomères éthyléniques. Selon un autre mode préférentiel, les blocs élastomères des élastomères thermoplastiques styréniques (TPS) de la deuxième couche sont choisis parmi les élastomères diéniques.

Préférentiellement, l'invention concerne un stratifié tel que défini ci-dessus, dans lequel les élastomères thermoplastiques styréniques (TPS) de la deuxième couche comportent entre 5 et 50% en masse de styrène. Plus préférentiellement, les élastomères thermoplastiques styréniques (TPS) de la deuxième couche sont choisis dans le groupe constitué par les élastomères thermoplastiques copolymères styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS), styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS), styrène/ butadiène/ butylène (SBB), styrène/ butadiène/ butylène/ styrène (SBBS) et les mélanges de ces copolymères.

De préférence, l'invention concerne un stratifié tel que défini ci-dessus, dans lequel le taux d'élastomère thermoplastique styrénique (TPS) dans la composition de la deuxième couche est compris dans un domaine allant de 5 à 45 pce, et plus préférentiellement, de 10 à 40 pce.

De manière préférentielle, l'invention concerne un stratifié tel que défini ci-dessus, dans lequel l'élastomère diénique de la deuxième couche est choisi dans le groupe constitué par les élastomères diéniques essentiellement insaturés, et les mélanges de ces élastomères. Préférentiellement, l'élastomère diénique de la deuxième couche est choisi dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers. Plus préférentiellement, l'élastomère diénique de la deuxième couche est choisi dans le groupe constitué par les polybutadiènes, les polyisoprènes de synthèse, le caoutchouc naturel, les copolymères de butadiène, les copolymères d'isoprène et les mélanges de ces élastomères.

De préférence, l'invention concerne un stratifié tel que défini ci-dessus, dans lequel la deuxième couche comprend une charge renforçante. Préférentiellement, la charge renforçante de la deuxième couche est du noir de carbone et/ou de la silice. Plus préférentiellement, la charge renforçante majoritaire de la deuxième couche est un noir de carbone.

L'invention concerne également un pneumatique comportant un stratifié tel que défini ci-dessus.

De plus, l'invention concerne également, l'utilisation dans un objet pneumatique d'un stratifié tel que défini précédemment.

L'invention concerne plus particulièrement les stratifiés tels que définis ci-dessus, utilisés dans des pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

L'invention ainsi que ses avantages seront aisément compris à la lumière de la description et des exemples de réalisation qui suivent.

### DESCRIPTION DETAILLEE DE L'INVENTION

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et diéniques confondus. Au sens de la présente invention, les élastomères thermoplastiques styréniques (TPS) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Pour les besoins de la présente invention, il est précisé que dans la présente demande de brevet, on dénomme « couche thermoplastique » une couche élastomérique comprenant, en poids, une plus grande quantité d'élastomère(s) thermoplastique(s) que d'élastomère(s) diénique(s) ; et on dénomme « couche diénique » une couche élastomérique comprenant, en poids, une plus grande quantité d'élastomère(s) diénique(s) que d'élastomère(s) thermoplastique(s). La couche étanche du stratifié selon l'invention, comportant majoritairement un TPS copolymère à blocs polystyrène et polyisobutylène, est bien une couche thermoplastique telle que définie ci-dessus.

Le stratifié selon l'invention présente une excellente adhésion entre les deux couches, dénommées pour le besoin de clarté de l'invention première et deuxième couches (ou respectivement, couche thermoplastique étanche et couche diénique). Ainsi, selon l'invention, la couche thermoplastique étanche telle que définie ci-dessus peut adhérer avec une couche diénique telle que définie ci-dessus, grâce à la présence d'une certaine quantité de TPS dans cette couche diénique.

Les détails de l'invention seront explicités ci-dessous, par la description dans un premier temps, des constituants communs éventuels des deux couches du stratifié de l'invention puis, dans un deuxième temps, par la description des éléments spécifiques de chacune des couches du stratifié de l'invention, et enfin par la description de l'adhésion entre les deux couches du stratifié selon l'invention.

Le stratifié étanche selon l'invention a pour caractéristique essentielle d'être pourvu d'au moins deux couches élastomériques dites « couche thermoplastique étanche » et « couche diénique » de formulations différentes, lesdites couches dudit stratifié comprenant au moins un élastomère thermoplastique styrénique (TPS) tel que défini ci-après, dont le copolymère à blocs polystyrène et polyisobutylène dans la couche étanche. En plus du copolymère à blocs polystyrène et polyisobutylène, la couche étanche comprend un système plastifiant dont la composition sera détaillée ci-après. En plus de l'élastomère thermoplastique styrénique (TPS), la couche diénique comprend également un élastomère diénique, sa composition sera détaillée dans ce qui suit.

### I- Composition de la couche étanche du stratifié de l'invention

### 1-1. Elastomère thermoplastique à blocs polystyrène et polyisobutylène.

La première couche, étanche à l'air ou plus généralement tout gaz de gonflage, comprend plus de 50 pce d'un TPS copolymère à blocs polystyrène et polyisobutylène.

Par "copolymère à blocs polystyrène et polyisobutylène" doit être entendu dans la présente demande tout copolymère thermoplastique styrénique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs saturés ou non (par exemple polyéthylène et/ou polypropylène) et/ou d'autres unités monomères. Puisque les copolymères à blocs polystyrène et polyisobutylène comportent un bloc polystyrène, ils font partie de la famille plus large des élastomères thermoplastiques styréniques (TPS) telle que détaillée ci-dessous dans la partie décrivant la composition de la couche diénique du stratifié de l'invention. Par bloc polystyrène, doit être entendu dans la présente description tout bloc issu de la polymérisation d'un ou plusieurs monomères à base de styrène, non substitué comme substitué ; parmi les styrènes substitués peuvent être cités par exemple les méthylstyrènes (par exemple α-méthylstyrène, β-méthylstyrène, *p*-méthylstyrène, *tert-*butylstyrène), les chlorostyrènes (par exemple monochlorostyrène, dichlorostyrène), les bromostyrènes.

On a constaté que la présence de ce copolymère à blocs polystyrène et polyisobutylène, tel que notamment les copolymères dibloc styrène/ isobutylène (en abrégé "SIB"), les copolymères tribloc styrène/ isobutylène/ styrène (en abrégé "SIBS"), offre au stratifié d'excellentes propriétés d'étanchéité tout en réduisant de manière notable l'hystérèse comparativement à des couches conventionnelles à base de caoutchouc butyl.

Ce copolymère à blocs polystyrène et polyisobutylène est en particulier choisi dans le groupe constitué par les SIB, les SIBS et les mélanges de ces copolymères SIB et SIBS, par définition totalement saturés.

Des copolymères à blocs polystyrène et polyisobutylène tels que SIB ou SIBS sont connus et disponibles commercialement, vendus par exemple par la société KANEKA sous la dénomination "SIBSTAR" (e.g. "Sibstar 103T", "Sibstar 102T", "Sibstar 073T" ou "Sibstar 072T" pour les SIBS ; "Sibstar 042D" pour les SIB). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPS, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146). L'application pneumatique est décrite dans les documents de brevet WO2 009/007064 et WO2010/063427.

La couche étanche aux gaz décrite ci-dessus pourrait éventuellement comporter d'autres élastomères que le copolymère à blocs polystyrène et polyisobutylène, dans une quantité minoritaire (inférieure à 50 pce). De tels élastomères complémentaires pourraient être par exemple des élastomères diéniques tels que définis dans ce qui suit pour la couche diénique du stratifié de l'invention, par exemple, du caoutchouc naturel ou un polyisoprène synthétique, un caoutchouc butyl voire d'autres élastomères thermoplastiques styréniques saturés, dans la limite de la compatibilité de leurs microstructures. Dans un tel cas et de préférence, le taux de copolymère à blocs polystyrène et polyisobutylène dans la première composition étanche est compris dans un domaine allant de 70 à 100 pce, en particulier compris dans un domaine allant de 80 à 100 pce.

Toutefois, selon un mode de réalisation particulièrement préférentiel, le copolymère à blocs polystyrène et polyisobutylène, en particulier SIB ou SIBS, est le seul élastomère thermoplastique, et plus généralement le seul élastomère présent dans la couche étanche aux gaz ; en conséquence, dans un tel cas, son taux est égal à 100 pce.

Le copolymère à blocs polystyrène et polyisobutylène ci-dessus décrit, en particulier SIB ou SIBS, est suffisant à lui seul pour que soit remplie, dans la première couche élastomère, la fonction d'étanchéité aux gaz vis-à-vis des objets pneumatiques dans lesquels ils sont utilisés.

### I-2. Système plastifiant

Le système plastifiant de la couche étanche du stratifié de l'invention est composé d'une huile plastifiante et d'une résine hydrocarbonée.

La fonction du système plastifiant est de faciliter la mise en oeuvre, particulièrement l'intégration dans un objet pneumatique par un abaissement de la viscosité et une augmentation du pouvoir tackifiant de la couche étanche aux gaz et donc du stratifié de l'invention. Ce système plastifiant comprend une huile plastifiante et une résine hydrocarbonée, le taux total de plastifiant étant compris dans un domaine allant de 2 à 70 pce, préférentiellement de 5 à 45 pce et plus préférentiellement de 10 à 35 pce.

Pour les besoins de la présente invention, les plastifiants, c'est-à-dire l'huile et la résine sont préférentiellement compatibles avec l'élastomère thermoplastique à blocs polystyrène et polyisobutylène. Par plastifiant compatible avec l'élastomère thermoplastique à blocs polystyrène et polyisobutylène, on entend un plastifiant (huile ou résine selon le plastifiant considéré) qui présente, en mélange avec l'élastomère thermoplastique à blocs polystyrène et polyisobutylène, une seule température de transition vitreuse (Tg) pour la partie élastomérique du mélange. Ladite compatibilité des plastifiants avec l'élastomère thermoplastique à blocs polystyrène et polyisobutylène permet un effet optimal des plastifiants.

L'huile plastifiante (ou huile d'extension) est utilisée à un taux allant de 1 à 40 pce, pce signifiant parties en poids pour cent parties d'élastomère total (i.e., copolymère à blocs polystyrène et polyisobutylène ci-dessus plus élastomère complémentaire le cas échéant) présent dans la première couche étanche.

En dessous du minimum indiqué, la couche étanche aux gaz et donc le stratifié multicouche risquent de présenter une viscosité trop forte pour être déposée sur la couche diénique après cuisson de cette dernière, et pénétrer dans les anfractuosités de la couche diénique, tandis qu'au-delà du maximum préconisé, on s'expose à un fluage à froid trop important susceptible d'entrainer des mouvements de matières indésirables par centrifugation lors de la mise en rotation du pneu.

Pour ces raisons, on préfère que l'huile d'extension soit utilisée à un taux allant de 2 à 30 pce et plus préférentiellement de 5 à20 pce.

On peut utiliser toute huile d'extension, de préférence à caractère faiblement polaire, apte à étendre, plastifier des élastomères, notamment thermoplastiques.

A température ambiante (23°C), ces huiles, plus ou moins visqueuses, sont des liquides (c'est-à-dire, pour rappel, des substances ayant la capacité de prendre à terme la forme de leur contenant), par opposition notamment à des résines qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales et les mélanges de ces huiles.

On utilise préférentiellement des huiles polybutènes, particulièrement des huiles polyisobutylènes (en abrégé "PIB") qui ont démontré le meilleur compromis de propriétés comparativement aux autres huiles testées, notamment à des huiles du type paraffiniques.

A titre d'exemples, des huiles polyisobutylène sont commercialisées notamment par la société UNIVAR sous la dénomination "Dynapak Poly" (e.g. "Dynapak Poly 190"), par BASF sous les dénominations "Glissopal" (e.g. "Glissopal 1000") ou "Oppanol" (e.g. "Oppanol B12"), par INEOS Oligomer sous la dénomination "Indopol H1200". Des huiles paraffiniques sont commercialisées par exemple par Exxon sous la dénomination "Telura 618" ou par Repsol sous la dénomination "Extensol 51".

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofuranne à une concentration d'environ 1 g/l ; puis la solution est filtrée sur filtre de porosité 0,45µm avant injection. L'appareillage est la chaîne chromatographique "WATERS alliance". Le solvant d'élution est le tétrahydrofuranne, le débit de 1 ml/min, la température du système de 35°C et la durée d'analyse de 30 min. On utilise un jeu de deux colonnes "WATERS" de dénomination "STYRAGEL HT6E". Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité d'huile d'extension en fonction des conditions particulières d'usage de la couche thermoplastique étanche aux gaz, notamment de l'objet pneumatique dans lequel elle est destinée à être utilisée.

Egalement le système plastifiant de la première couche du stratifié de l'invention comprend une résine hydrocarbonée.

La dénomination "résine" est réservée dans la présente demande, par définition connue de l'homme du métier, à un composé qui est solide à température ambiante (23°C), par opposition à un composé plastifiant liquide tel qu'une huile.

Les résines hydrocarbonées sont des polymères bien connus de l'homme du métier, essentiellement à base de carbone et hydrogène, utilisables en particulier comme agents plastifiants dans des matrices polymériques. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont par définition miscibles (i.e., compatibles) aux taux utilisés avec les compositions de polymères auxquelles elles sont destinées, de manière à agir comme de véritables agents diluants. Leur Tg est de préférence supérieure à 0°C, notamment supérieure à 20°C (le plus souvent comprise entre 30°C et 120°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "softening point"), température à laquelle le produit, par exemple sous forme de poudre, s'agglutine. La température de ramollissement d'une résine hydrocarbonée est généralement supérieure d'environ 50 à 60°C à sa valeur de Tg.

Dans le système plastifiant, la résine est utilisée à un taux pondéral allant de 1 à 40 pce. En dessous de 1 pce, l'effet de la résine est peu remarquable, alors qu'au-delà de 40 pce, on s'expose à une augmentation simultanée de l'hystérèse. Pour ces raisons, le taux de résine est préférentiellement de 2 à 30 pce et de manière très préférentielle de 5 à 20 pce.

Selon un mode de réalisation préférentiel de l'invention, la résine hydrocarbonée présente au moins une quelconque, plus préférentiellement l'ensemble des caractéristiques suivantes :
- une Tg supérieure à 10°C, et plus préférentiellement supérieure à 30°C ;
- un point de ramollissement supérieur à 50°C, préférentiellement supérieur à 80°C (en particulier compris entre 80°C et 160°C) ;
- une masse molaire moyenne en nombre (Mn) comprise entre 200 et 3000 g/mol ;
- un indice de polymolécularité (Ip) inférieur ou égal à 4 (rappel : Ip = Mw/Mn avec Mw masse molaire moyenne en poids).

Plus préférentiellement, cette résine hydrocarbonée présente au moins une quelconque, plus préférentiellement l'ensemble des caractéristiques suivantes :
- une Tg comprise entre 30°C et 120°C (notamment entre 35°C et 105°C) ;
- un point de ramollissement supérieur à 90°C, en particulier compris entre 110°C et 150°C ;
- une masse moyenne Mn comprise entre 400 et 1500 g/mol ;
- un indice de polymolécularité Ip inférieur à 3 et en particulier inférieur à 2.

Le point de ramollissement est mesuré selon la norme ISO 4625 (méthode "Ring and Ball"). La Tg est mesurée selon la norme ASTM D3418 (1999). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère de deux monomères vinylaromatiques différents, (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, béta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, les résines de copolymère styrène/ alphaméthylstyrène, et les mélanges de ces résines. De manière très préférentielle, la résine est une résine de copolymère styrène/ alphaméthylstyrène.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C5/ styrène ou résines coupe C5/ coupe C9, par la société Struktol sous dénomination "40 MS" ou "40 NS" (mélanges de résines aromatiques et/ou aliphatiques), par la société Eastman, sous la dénomination "Eastotac", telles que "Eastotac H-142W" pour ce qui concerne les résines d'hydrocarbone aliphatique hydrogénées, ou encore par la société Arizona sous la dénomination « Sylvares SA 140 » pour les résines styrène/ alphaméthylstyrène.

### 1-3. Charges lamellaires

Les élastomères décrits précédemment sont suffisants à eux seuls pour que soit utilisable le stratifié multicouche selon l'invention, néanmoins une charge lamellaire peut être utilisée dans la composition de la couche étanche du stratifié de l'invention.

L'utilisation préférentielle de charge lamellaire, permet avantageusement d'abaisser le coefficient de perméabilité (donc d'augmenter l'étanchéité) de la composition élastomère, sans augmenter de façon excessive son module, ce qui permet de conserver la facilité d'intégration de la couche étanche dans l'objet pneumatique.

Les charges dites lamellaires (en anglais *"platy fillers"*) sont bien connues de l'homme du métier. Elles ont été utilisées notamment dans des bandages pneumatiques pour réduire la perméabilité des couches étanches aux gaz conventionnelles à base de caoutchouc butyl. Dans ces couches à base de butyl, elles sont généralement utilisées à des taux relativement faibles, n'excédant pas le plus souvent 10 à 15 pce (voir par exemple les documents brevet US 2004/0194863, WO 2006/047509).

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les phyllosilicates et les mélanges de telles charges. Parmi les phyllosilicates, on citera notamment les argiles, talcs, micas, kaolins, ces phyllosilicates pouvant être modifiés ou non par exemple par un traitement de surface ; à titre d'exemples de tels phyllosilicates modifiés, on peut citer notamment des micas recouverts d'oxyde de titane, des argiles modifiées par des tensioactifs (*"organo clays"*).

On utilise préférentiellement des charges lamellaires à faible énergie de surface, c'est-à-dire relativement apolaires, telles que celles choisies dans le groupe constitué par les graphites, les talcs, les micas et les mélanges de telles charges, ces dernières pouvant être modifiées ou non, plus préférentiellement encore dans le groupe constitué par les graphites, les talcs et les mélanges de telles charges. Parmi les graphites peuvent être cités notamment les graphites naturels, les graphites expansés ou les graphites synthétiques.

Comme exemples de micas, on peut citer les micas commercialisés par la société CMMP (Mica-MU®, Mica-Soft®, Briomica® par exemple), les vermiculites (notamment la vermiculite Shawatec® commercialisée par CMMP ou la vermiculite Microlite® commercialisée par W.R.Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac.

Les charges lamellaires décrites ci-dessus sont préférentiellement utilisées à un taux volumique compris préférentiellement entre 0% et 50%, plus préférentiellement entre 1% et 50%, encore plus préférentiellement entre 5 et 50%.

Selon un mode de réalisation particulier, le taux de charge lamellaire dans la composition est, de préférence au moins égal à 10% en volume de composition élastomère. Un tel taux volumique correspond typiquement, compte tenu de la densité moyenne des charges lamellaires utilisées (typiquement entre 2,0 et 3,0) et de celle des élastomères TPS utilisés, à un taux pondéral supérieur à 20 pce, de préférence au moins égal à 40 pce.

Pour augmenter encore l'étanchéité de la couche d'élastomère TPS, on peut utiliser un taux de charge lamellaire encore supérieur, au moins égal à 15% voire 20% en volume, ce qui correspond typiquement à des taux pondéraux au moins égaux à 50 pce voire 80 pce. Des taux pondéraux supérieurs à 100 pce sont même avantageusement possibles.

Le taux de charge lamellaire est toutefois préférentiellement inférieur à 50% en volume (typiquement inférieur à 500 pce), limite supérieure à partir de laquelle on peut être exposé à des problèmes d'augmentation du module, de fragilisation de la composition, difficultés de dispersion de la charge et de mise en oeuvre, sans parler d'une pénalisation possible de l'hystérèse.

L'introduction des charges lamellaires dans la composition thermoplastique élastomère peut être réalisée selon divers procédés connus, par exemple par mélangeage en solution, par mélangeage en masse dans un mélangeur interne, ou encore par mélangeage par extrusion.

### 1-4. Additifs divers

La couche ou composition étanche à l'air décrite précédemment peut comporter par ailleurs les divers additifs usuellement présents dans les couches étanches à l'air connues de l'homme du métier. On citera par exemple des charges renforçantes telles que du noir de carbone ou de la silice, des charges non renforçantes ou inertes autres que les charges lamellaires précédemment décrites, des agents colorants avantageusement utilisables pour la coloration de la composition, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

De manière préférentielle, la couche thermoplastique étanche du stratifié multicouche ne contient pas tous ces additifs en même temps et de préférentiellement dans certains cas, le stratifié multicouche ne contient aucun de ces agents.

Egalement et à titre optionnel, la composition des couches du stratifié multicouche de l'invention peut contenir un système de réticulation connu de l'homme du métier. Préférentiellement, la composition ne contient pas de système de réticulation.

Outre les élastomères précédemment décrits, les compositions du stratifié multicouche peuvent aussi comporter, toujours selon une fraction pondérale minoritaire par rapport à l'élastomère blocs, un ou plusieurs polymères thermoplastiques (non élastomériques), tels que ceux à base de polyéther.

### II- Composition de la couche diénique du stratifié de l'invention

### II-1. Elastomère thermoplastique styrénique (TPS)

La deuxième couche, diénique, comprend un TPS, toujours selon une fraction minoritaire de ses élastomères.

Les élastomères thermoplastiques styréniques (en abrégé "TPS") font partie, de manière connue, de la famille des élastomères thermoplastiques (en abrégé "TPE"). De structure intermédiaire entre polymères thermoplastiques et élastomères, ils sont constitués de séquences rigides polystyrène reliées par des séquences souples élastomère, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

Par styrène, doit être entendu dans la présente description tout monomère à base de styrène, non substitué comme substitué ; parmi les styrènes substitués peuvent être cités par exemple les méthylstyrènes (par exemple α-méthylstyrène, β-méthylstyrène, *p-*méthylstyrène, *tert*-butylstyrène), les chlorostyrènes (par exemple monochlorostyrène, dichlorostyrène), les bromostyrènes.

La masse moléculaire moyenne en nombre (notée Mn) de l'élastomère TPS est préférentiellement comprise entre 30 000 et 500 000 g/mol, plus préférentiellement comprise entre 40 000 et 400 000 g/mol. En dessous des minima indiqués, la cohésion entre les chaînes de l'élastomère, notamment en raison de l'éventuelle dilution de ce dernier par une huile d'extension, risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse de la couche étanche aux gaz. Ainsi, on a constaté qu'une valeur comprise dans un domaine de 50 000 à 300 000 g/mol était particulièrement bien adaptée, notamment à une utilisation de la composition dans un bandage pneumatique.

La masse moléculaire moyenne en nombre (Mn) de l'élastomère TPS est déterminée de manière connue, par chromatographie d'exclusion stérique (SEC). L'échantillon est préalablement solubilisé dans du tétrahydrofuranne à une concentration d'environ 1 g/l; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) de l'élastomère TPS est de préférence inférieur à 3 ; plus préférentiellement Ip est inférieur à 2.

Selon un mode de réalisation préférentiel de l'invention, le taux pondéral de styrène, dans l'élastomère TPS, est compris entre 5% et 50%. En dessous du minimum indiqué, le caractère thermoplastique de l'élastomère risque de diminuer de manière sensible tandis qu'au-dessus du maximum préconisé, l'élasticité de la couche étanche peut être affectée. Pour ces raisons, le taux de styrène est plus préférentiellement compris entre 10% et 40%, en particulier entre 15 et 35%.

Les blocs élastomères du TPE pour les besoins de l'invention, peuvent être tous les élastomères connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Pour les blocs élastomères à chaîne carbonée, si la partie élastomère du TPE ne comporte pas d'insaturation éthylénique, on parlera d'un bloc élastomère saturé. Si le bloc élastomère du TPE comporte des insaturations éthyléniques (c'est-à-dire des doubles liaisons carbone - carbone), on parlera alors d'un bloc élastomère insaturé ou diénique.

Un bloc élastomère saturé est constitué d'une séquence de polymère obtenu par la polymérisation d'au moins un (c'est-à-dire un ou plusieurs) monomère éthylénique, c'est-à-dire comportant une double liaison carbone - carbone. Parmi les blocs issus de ces monomères éthyléniques, on peut citer les blocs polyalkylènes, tels que les blocs polyisobutylène, polybutylène, polyéthylène, polypropylène ou encore tels que les copolymères statistiques éthylène - propylène ou éthylène - butylène. Ces blocs élastomères saturés peuvent aussi être obtenus par hydrogénation de blocs élastomères insaturés. Il peut aussi s'agir de blocs aliphatiques issus de la famille des polyéthers, des polyesters, ou des polycarbonates.

Dans le cas des blocs élastomères saturés, ce bloc élastomère du TPE est de préférence composé majoritairement d'unités éthyléniques. Par majoritairement, on entend un taux pondéral en monomère éthylénique le plus élevé par rapport au poids total du bloc élastomère, et de préférence un taux pondéral de plus de 50%, plus préférentiellement de plus de 75% et encore plus préférentiellement de plus de 85%.

Des diènes conjugués en C₄ - C₁₄ peuvent être copolymérisés avec les monomères éthyléniques. Il s'agit dans ce cas de copolymères statistiques. De préférence, ces diènes conjugués sont choisis parmi l'isoprène, le butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, 1-vinyl-1,3-cyclohexadiène ou leur mélange. Plus préférentiellement le diène conjugué est choisi parmi le butadiène ou l'isoprène ou un mélange contenant du butadiène et de l'isoprène.

Dans le cas des blocs élastomères insaturés, ce bloc élastomère du TPE est de préférence composé majoritairement d'une partie élastomère diénique. Par majoritairement, on entend un taux pondéral en monomère diénique le plus élevé par rapport au poids total du bloc élastomère, et de préférence un taux pondéral de plus de 50%, plus préférentiellement de plus de 75% et encore plus préférentiellement de plus de 85%. Alternativement, l'insaturation du bloc élastomère insaturé peut provenir d'un monomère comportant une double liaison et une insaturation de type cyclique, c'est le cas par exemple dans le polynorbornène.

Préférentiellement, des diènes conjugués en C₄ - C₁₄ peuvent être polymérisés ou copolymérisés pour constituer un bloc élastomère diénique. De préférence, ces diènes conjugués sont choisis parmi l'isoprène, le butadiène, le pipérylène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 2-méthyl-1,4-pentadiène, le 1,3-hexadiène, le 2-méthyl-1,3-hexadiène, le 2-méthyl-1,5-hexadiène, le 3-méthyl-1,3-hexadiène, le 4-méthyl-1,3-hexadiène, le 5-méthyl-1,3-hexadiène, le 2,5-diméthyl-1,3-hexadiène, le 2,5-diméthyl-2,4-hexadiène, le 2-néopentyl-1,3-butadiène, le 1,3-cyclopentadiène, le méthylcyclopentadiène, le 2-méthyl-1,6-heptadiène, le 1,3-cyclohexadiène, 1-vinyl-1,3-cyclohexadiène ou leur mélange. Plus préférentiellement le diène conjugué est l'isoprène ou le butadiène ou un mélange contenant de l'isoprène et/ou du butadiène.

Selon une variante, les monomères polymérisés pour former la partie élastomère du TPE peuvent être copolymérisés, de manière statistique, avec au moins un autre monomère de manière à former un bloc élastomère. Selon cette variante, la fraction molaire en monomère polymérisé autre qu'un monomère éthylénique, par rapport au nombre total de motifs du bloc élastomère, doit être telle que ce bloc garde ses propriétés d'élastomère. Avantageusement la fraction molaire de cet autre co-monomère peut aller de 0 à 50%, plus préférentiellement de 0 à 45% et encore plus préférentiellement de 0 à 40%.

A titre d'illustration, cet autre monomère susceptible de copolymériser avec le monomère premier peut être choisi parmi les monomères éthyléniques tels que définis précédemment (par exemple l'éthylène), les monomères diènes, plus particulièrement, les monomères diènes conjugués ayant 4 à 14 atomes de carbone tels que définis précédemment (par exemple le butadiène), les monomères de type vinylaromatiques ayant de 8 à 20 atomes de carbone tels que définis ci-après ou encore, il peut s'agir d'un monomère tel que l'acétate de vinyle).

Lorsque le co-monomère est de type vinylaromatique, il représente avantageusement une fraction en motifs sur le nombre total de motifs du bloc thermoplastique de 0 à 50%, préférentiellement allant de 0 à 45% et encore plus préférentiellement allant de 0 à 40%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés élastomériques et une tenue mécanique suffisante et compatible avec l'utilisation en stratifié multicouche de pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

L'élastomère TPS peut être choisi notamment dans le groupe constitué par les copolymères blocs styrène/ éthylène/ butylène (SEB), styrène/ éthylène/ propylène (SEP), styrène/ éthylène/ éthylène/ propylène (SEEP), styrène/ éthylène/ butylène/ styrène (SEBS), styrène/ éthylène/ propylène/ styrène (SEPS), styrène/ éthylène/ éthylène/ propylène/ styrène (SEEPS), styrène/ isobutylène (SIB), styrène/ isobutylène/ styrène (SIBS), styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS), styrène/ butadiène/ butylène (SBB), styrène/ butadiène/ butylène/ styrène (SBBS) et les mélanges de ces copolymères.

De préférence, l'élastomère TPS est un copolymère à blocs polystyrène et polyisobutylène. Par une telle définition doit être entendu tout copolymère thermoplastique comportant au moins un bloc polystyrène (c'est-à-dire un ou plusieurs blocs polystyrène) et au moins un bloc polyisobutylène (c'est-à-dire un ou plusieurs blocs polyisobutylène), auxquels peuvent être associés ou non d'autres blocs (par exemple polyéthylène et/ou polypropylène) et/ou d'autres unités monomères (par exemple des unités insaturées telles que diéniques).

Plus préférentiellement encore, un tel copolymère blocs est un copolymère tribloc styrène/ isobutylène/ styrène (en abrégé "SIBS"). Par élastomère ou copolymère SIBS on entend dans la présente demande, par définition, tout élastomère tribloc styrène/ isobutylène/ styrène dans lequel le bloc central polyisobutylène peut être interrompu ou non par une ou plusieurs unités insaturées, en particulier une ou plusieurs unités diéniques telles qu'isopréniques, éventuellement halogénées.

Les élastomères TPS sont disponibles commercialement, vendus par exemple en ce qui concerne les SIBS par la société KANEKA sous la dénomination "SIBSTAR" (e.g. "Sibstar 102T", "Sibstar 103T" ou "Sibstar 073T").

Le taux de TPS dans la deuxième couche (c'est-à-dire le taux total s'il y a plusieurs copolymères à blocs polystyrène), est compris dans un domaine allant de 5 à moins de 50 pce, en particulier compris dans un domaine allant de 5 à 45 pce et plus particulièrement dans un domaine allant de 10 à 40 pce. En dessous du taux minimum de TPS, l'effet adhésif n'est pas suffisant tandis qu'au-delà du maximum préconisé, les propriétés de la couche diénique sont trop altérées par la forte présence de TPS.

### II-2 Elastomère diénique

La composition de la couche diénique comprend plus d'élastomère(s) diénique(s) que d'élastomère(s) thermoplastique(s).

Ainsi, la composition de la couche diénique comporte au moins un (c'est-à-dire un ou plusieurs) élastomère diénique, pouvant être utilisé seul, ou en coupage avec au moins un (c'est-à-dire un ou plusieurs) autre élastomère (ou caoutchouc) diénique.

Par élastomère ou caoutchouc « diénique », doit être compris de manière connue un (on entend un ou plusieurs) élastomère issu au moins en partie (i.e. un homopolymère ou un copolymère) de monomères diènes (monomères porteurs de deux doubles liaisons carbone - carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelle que soit la catégorie ci-dessus, susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication du stratifié multicouche selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Le taux d'élastomère diénique (c'est-à-dire le taux total s'il y en a plusieurs) dans cette deuxième couche est compris entre 50 et 95 pce. Selon un mode de réalisation préférentiel de l'invention, le taux d'élastomère diénique (c'est-à-dire le taux total s'il y en a plusieurs) est préférentiellement compris dans un domaine allant de 55 à 95 pce et plus préférentiellement de 60 à 90 pce.

### II-3. Charges nanométriques (ou renforçantes)

Les élastomères décrits précédemment sont suffisants à eux seuls pour que soit utilisable le stratifié multicouche selon l'invention, néanmoins une charge renforçante peut être utilisée dans la composition de la couche diénique du stratifié de l'invention.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Lorsqu'une charge renforçante inorganique est utilisée, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

### II-4. Additifs divers

La couche diénique du stratifié multicouche de l'invention peut comporter par ailleurs les divers additifs usuellement présents dans les couches élastomériques de pneumatique connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure du pneumatique. Egalement et à titre préférentiel, la composition de la couche diénique contient un système de réticulation connu de l'homme du métier.

Optionnellement également, la composition des couches du stratifié multicouche de l'invention peut contenir un agent plastifiant, tel qu'une huile d'extension (ou huile plastifiante) ou une résine plastifiante dont la fonction est de faciliter la mise en oeuvre de le stratifié multicouche, particulièrement son intégration au pneumatique par un abaissement du module et une augmentation du pouvoir tackifiant.

### III- Préparation du stratifié multicouche

Comme indiqué précédemment, le stratifié multicouches de l'invention a donc pour caractéristique essentielle de comporter au moins deux couches adjacentes d'élastomère :
∘ une première couche, constituée d'une composition à base d'au moins un élastomère thermoplastique à blocs polystyrène et polyisobutylène, le taux d'élastomère thermoplastique à blocs polystyrène et polyisobutylène étant compris dans un domaine allant de plus de 50 à 100 pce (parties en poids pour 100 parties en poids d'élastomère), et d'un système plastifiant comprenant de 1 à 40 pce d'une huile plastifiante et de 1 à 40 pce d'une résine hydrocarbonée, le taux total de plastifiant étant compris dans un domaine allant de 2 à 70 pce ;
∘ une deuxième couche, constituée d'une composition à base d'au moins un élastomère diénique, le taux d'élastomère diénique étant compris dans un domaine allant de plus de 50 à 95 pce, et d'au moins un élastomère thermoplastique styrénique (TPS), le taux d'élastomère thermoplastique styrénique étant compris dans un domaine allant de 5 à moins de 50 pce.

Le stratifié multicouche de l'invention est préparé selon les méthodes connues de l'homme de l'art, en préparant séparément les deux couches du stratifié, puis en associant la couche thermoplastique à la couche diénique, avant ou après la cuisson de cette dernière. L'association de la couche thermoplastique à la couche diénique peut se faire sous l'action de chaleur et éventuellement de pression. La composition de la couche étanche du stratifié de l'invention est ici particulièrement adaptée à une pose de ladite couche étanche après cuisson de la couche diénique du stratifié.

### III-1. Première couche ou couche thermoplastique étanche

La couche thermoplastique étanche du stratifié multicouche de l'invention est préparée de façon classique, par exemple, par incorporation des différents composants dans une extrudeuse bi-vis, de façon à réaliser la fusion de la matrice et une incorporation de tous les ingrédients, puis utilisation d'une filière plate permettant de réaliser la couche thermoplastique. Plus généralement, la mise en forme de la couche thermoplastique étanche peut être faite par toute méthode connue de l'homme du métier : extrusion, calandrage, extrusion soufflage, injection, cast film.

De préférence, la couche thermoplastique précédemment décrite a une épaisseur supérieure à 0,05 mm, plus préférentiellement comprise entre 0,1 et 10 mm (par exemple de 0,2 à 2 mm).

On comprendra aisément que, selon les domaines d'application spécifiques, les dimensions et les pressions enjeu, le mode de mise en oeuvre de l'invention peut varier, la première couche étanche à l'air comportant en fait plusieurs gammes préférentielles d'épaisseur. Ainsi, par exemple, pour des bandages pneumatiques de type tourisme, elles peuvent avoir une épaisseur d'au moins 0,3 mm, préférentiellement comprise entre 0,5 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

### III-2. Deuxième couche ou couche diénique

La couche diénique du stratifié multicouche de l'invention est préparée dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, tels que les élastomères TPS, les éventuelles charges, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

La composition finale ainsi obtenue est ensuite calandrée par exemple sous la forme d'une couche dénommée dans la présente invention couche diénique.

### III-3. Préparation du stratifié

Le stratifié multicouche de l'invention est préparé par association de la couche thermoplastique étanche à la couche diénique, avant ou après cuisson de cette dernière. Avant cuisson, cela consiste à poser la couche thermoplastique sur la couche diénique pour former le stratifié de l'invention puis procéder à la cuisson du stratifié ou du pneumatique muni dudit stratifié. Après cuisson, la couche thermoplastique est déposée sur la couche de diénique déjà cuite. Pour que l'adhésion puisse s'établir, il faut une température à l'interface supérieure à la température de mise en oeuvre du TPS, elle-même supérieure à la température de transition vitreuse (Tg) et, dans le cas d'un bloc thermoplastique semi cristallin, à la température de fusion (Tf) dudit TPS, éventuellement associée à l'application de pression.

### IV- Utilisation du stratifié dans un pneumatique

Le stratifié de l'invention peut être utilisé dans tout type de pneumatique. Il est particulièrement bien adapté à une utilisation dans un pneumatique, produit fini de pneumatique ou semi-fini de pneumatique, en caoutchouc, tout particulièrement dans un bandage pneumatique pour véhicule automobile tel qu'un véhicule de type deux roues, tourisme ou industriel, ou non automobile tel que vélo.

Le stratifié de l'invention peut être fabriqué en associant les couches du stratifié avant la cuisson, ou même après la cuisson. Plus précisément, la couche thermoplastique ne nécessitant pas de cuisson, elle peut être associée à la couche diénique du stratifié de l'invention avant ou après la cuisson de cette couche diénique, qui elle nécessite une cuisson avant d'être utilisée en pneumatique. Ainsi, la couche étanche du stratifié de l'invention peut être avantageusement assemblée à la couche diénique du stratifié après fabrication et cuisson d'un pneumatique incorporant comme dernière couche radialement interne la couche diénique du stratifié de l'invention. Dans ce cas l'assemblage des deux couches du stratifié de l'invention est donc postérieur à la fabrication du pneumatique incorporant la couche diénique dudit stratifié.

Le stratifié multicouche de l'invention est avantageusement utilisable dans les bandages pneumatiques de tous types de véhicules, en particulier dans les bandages pour véhicules de tourisme susceptibles de rouler à très haute vitesse ou les bandages pour véhicules industriels tels que poids-lourd.

Un tel stratifié est préférentiellement disposé sur la paroi interne de l'objet pneumatique, le recouvrant totalement ou au moins en partie, mais il peut être également intégré complètement à sa structure interne.

Comparativement à une couche d'étanchéité usuelle à base de caoutchouc butyl, le stratifié multicouche de l'invention a l'avantage de présenter une hystérèse nettement plus faible, et donc d'offrir une résistance au roulement réduite aux bandages pneumatiques, par l'utilisation d'une couche étanche thermoplastique. De plus, cette couche étanche thermoplastique peut être posée sur la couche diénique du stratifié après cuisson du pneumatique.

Par ailleurs, comparativement aux couches d'étanchéité connues comprenant le copolymère à blocs polystyrène et polyisobutylène, le stratifié de l'invention présente l'avantage majeur d'adhérer à une couche diénique conventionnelle, sans nécessiter une couche d'adhésion spécifique, puisque la deuxième couche du stratifié est cette couche conventionnelle, dans laquelle on remplace une fraction de l'élastomère diénique par un élastomère thermoplastique styrénique (TPS).

### V- Exemples

### V-1. Préparation des exemples

Les exemples de stratifié multicouche de l'invention sont préparés comme indiqué précédemment.

### V-2. Description des tests utilisés

### Mesure de viscosité

Le principe consiste à mesurer le module de la viscosité dynamique lors d'une sollicitation en cisaillement. On utilise un rhéomètre mécanique dynamique (RPA 2000) commercialisé par la société Alpha technologies. L'échantillon se présente sous la forme d'un disque d'une masse de 5g. L'échantillon est confiné à l'aide d'un joint torique entre deux plateaux imposant une géométrie de type cône/cône. Le plateau inférieur est mobile en rotation alors que le plateau supérieur est fixe ; le mors mobile permet d'appliquer une déformation angulaire dynamique de 5% à une fréquence de 10Hz pendant une élévation de température (de 40° à 220°C à une vitesse de l'ordre de 3°C/min) ; l'appareil mesure le couple imposé correspondant à la déformation angulaire imposée et en déduit le module de la viscosité dynamique η (en Pa.s) du matériau au cours de cette sollicitation mécanique et thermique.

Les résultats se présentent sous forme de courbe de module de la viscosité dynamique η en fonction de la température. On relève deux valeurs particulières de la viscosité correspondant respectivement à la température de 50°C et de 200°C. La comparaison des matériaux étudiés se fait sur la base de la valeur de la viscosité η_{200°C}. Une valeur arbitraire de 100 est donnée pour la viscosité du témoin, un résultat supérieur à 100 indiquant une diminution de la viscosité, et donc une amélioration de la performance viscosité.

### Mesure d'hystérèse

Le principe consiste à mesurer le module de perte (E") d'un film de matériau lors d'une sollicitation dynamique. On utilise un analyseur mécanique dynamique (DMA Q800) commercialisé par la société TA Instruments. L'échantillon se présente sous la forme d'un film de 4 mm de largeur et 1 mm d'épaisseur. Le porte échantillon est constitué de 2 mors venant enserrer les extrémités de l'échantillon ; la distance inter mors est de 10mm ; le mors supérieur est mobile alors que le mors inférieur est fixe ; le mors mobile permet d'appliquer une pré-effort statique de 0,1N auquel vient s'ajouter une déformation dynamique de 7% à une fréquence de 1Hz pendant une élévation de température (de l'ambiante à 180°C à 3°C/min) ; on enregistre le module de perte E" engendré par le matériau au cours de cette sollicitation mécanique et thermique.

Les résultats se présentent sous forme de courbe de module de perte E" en fonction de la température. La comparaison des matériaux étudiés se fait sur la base de la valeur du module de perte E" correspondant à la température de 40°C. Une valeur arbitraire de 100 est donnée pour le module de perte du témoin, un résultat supérieur à 100 indiquant une diminution du module de perte E", c'est-à-dire de l'hystérèse, et donc une amélioration de la performance hystérèse.

### Tests d'étanchéité (ou test de perméabilité)

Pour cette analyse, on utilise un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 1,5 mm (0,5 mm dans le cas présent). Le capteur de pression est connecté à une carte d'acquisition de données National Instruments (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente α de la perte de pression à travers l'éprouvette testée en fonction du temps, après stabilisation du système c'est-à-dire obtention d'un régime stable au cours duquel la pression décroît linéairement en fonction du temps. Une valeur arbitraire de 100 est donnée pour la l'étanchéité à l'air du témoin, un résultat supérieur à 100 indiquant une augmentation de l'étanchéité à l'air donc une diminution de la perméabilité, et donc une amélioration de la performance perméabilité.

### Mesure d'adhésion

Les exemples de stratifié multicouche de l'invention sont testés quant à l'adhésion de la couche thermoplastique étanche à la couche diénique selon un test dit de pelage. Les éprouvettes de pelage sont réalisées par mise en contact des deux couches du stratifié, chacune des couches étant renforcée par un tissu (de façon à limiter la déformation desdites couches sous traction). Une amorce de rupture est insérée entre les deux couches.

Selon que l'on évalue l'adhésion avant ou après cuisson, le mélange de la couche diénique est respectivement non cuit ou cuit au préalable (180°C pendant 10 minutes). Dans tous les cas, l'éprouvette de stratifié une fois assemblé est portée à 180°C sous pression pendant 10 minutes. Des bandes de 30 mm de largeur sont découpées au massicot. Les deux côtés de l'amorce de rupture sont ensuite placées dans les mors d'un machine de traction de marque Intron^{®}. Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe. Les performances des exemples sont normées par rapport au témoin (base 100), un résultat supérieur à 100 indiquant donc une amélioration de la performance adhésion.

### V-3. Exemples

### V-3-1. Exemples de couches de stratifié

Diverses compositions thermoplastiques étanches de stratifié multicouche, et diverses couches diéniques ont été préparées, les compositions sont présentés dans les tableaux 1A et 1B ci-dessous.

Dans la composition A1, 28 pce de la charge lamellaire correspondent à un taux de 5% (pourcentage volumique).

**Tableau 1A**

| Composition thermoplastique | A1 | A2 | A3 | A4 | A5 |
|---|---|---|---|---|---|
| SIBS 102T -KANEKA- (pce) | 100 | 100 | 100 | 100 | 100 |
| Huile PIB H1200 -INEOS- (pce) | 65 | 0 | 25 | 0 | 12,5 |
| Résine SA 140 - ARIZONA (pce) | 0 | 0 | 0 | 25 | 12,5 |
| Charge lamellaire SYA21R - YAMAGUSHI (pce) | 28 | 0 | 0 | 0 | 0 |

**Tableau 1B**

| Composition diénique: | B1 | B2 | B3 | B4 | B5 |
|---|---|---|---|---|---|
| NR (1) | 55 | 38 | 38 | 42 | 24 |
| BR (2) | 20 | 14 | 14 | 28 | 16 |
| SBR (3) | 25 | 16 | 16 | 0 | 0 |
| SIS (4) | 0 | 32 | 0 | 0 | 0 |
| SEBS (5) | 0 | 0 | 32 | 0 | 0 |
| SIBS (6) | 0 | 0 | 0 | 30 | 60 |
| Noir de carbone (7) | 42 | 42 | 42 | 60 | 60 |
| Plastifiant (8) | 14 | 14 | 14 | 0 | 0 |
| Antioxydant (9) | 1,5 | 1,5 | 1,5 | 1,5 | 1,5 |
| Acide stéarique | 1 | 1 | 1 | 0,5 | 0,5 |
| ZnO | 3 | 3 | 3 | 3 | 3 |
| Soufre | 2 | 2 | 2 | 2,5 | 2,5 |
| Accélérateur (10) | 1 | 1 | 1 | 1,5 | 1,5 |

| | | | | | |
|---|---|---|---|---|---|
| (1) NR caoutchouc naturel (2) BR polybutadiène avec 4% de motif 1,2 et 93% de 1,4-cis (Tg= -106°C) (3) SBR solution copolymère de styrène et de butadiène avec 25% de motifs styrène et 48% de modifs 1,2 de la partie butadiène (Tg de -48°C) (4) SIS «D1161» commercialisé par Kraton (5) SEBS « G1654 » commercialisé par Kraton (6) SIBS « Sibstar 102 T» commercialisé par la société Kaneka (7) Grade ASTM N347 ou ASTM N683 commercialisé par la société Cabot (8) Huile MES « Catenex SNR » commercialisé par la société Shell (9) N-(1,3-diméthylbutyl)-N'-phényl-p-phénylènediamine « 6-PPD » de la société Flexsys (10) N-cyclohexyl-2-benzothiazol-sulfénamide « Santocure CBS » de la société Flexsys | | | | | |

### V-3-2. Exemples de stratifiés à adhésion améliorée

### Assemblage des couches avant cuisson

Dans un premier temps, la composition A1, et diverses couches diéniques ont été préparées, assemblées avant cuisson et testées comme indiqué précédemment, les résultats d'adhésion sont présentés dans le tableau 2 ci-dessous.

**Tableau 2**

| Stratifié multicouches | A1/B1 | A1/B2 | A1/B3 | A1/B4 | A1/B5 |
|---|---|---|---|---|---|
| Adhésion (%) | 100 | 264 | 560 | 390 | 472 |

Les résultats présentés au tableau 2 mettent en évidence les excellents résultats en adhésion du stratifié dans lequel la couche diénique comprend un élastomère thermoplastique styrénique, comparé à une situation dans laquelle la couche thermoplastique est associée à une couche diénique conventionnelle (c'est-à-dire ne comprenant pas du tout de TPS dans sa composition). On note aussi que l'adhésion du stratifié est du même niveau que l'adhésion d'un stratifié de deux couches thermoplastiques représenté par la combinaison de A1 avec B5.

### Assemblage des couches après cuisson

Dans un deuxième temps, la composition thermoplastique A1, et les couches notées B1, B4 et B5 précédemment définies ont été préparées, assemblées après cuisson et testées comme indiqué précédemment, les résultats d'adhésion sont présentés dans le tableau 3 ci-dessous.

**Tableau 3**

| Stratifié multicouches | A1/B1 | A1/B4 | A1/B5 |
|---|---|---|---|
| Adhésion (%) | 100 | 440 | 361 |

Les résultats présentés au tableau 3 mettent en évidence les excellents résultats en adhésion du stratifié dans lequel la couche diénique comprend un élastomère thermoplastique styrénique, y compris après cuisson de la couche diénique. On note également que le témoin A1/B5 met en évidence qu'un taux de TPS de plus de 50 pce dans la couche dite diénique ne permet pas d'obtenir une adhésion aussi bonne qu'avec le stratifié dans lequel la couche diénique comprend un taux d'élastomère thermoplastique styrénique compris dans un domaine allant de 5 à moins de 50 pce.

Par ailleurs, pour un assemblage de la première couche du stratifié (la couche étanche thermoplastique) avec la deuxième couche du stratifié (la couche diénique) après cuisson de cette dernière, les demanderesses ont poursuivi leurs travaux afin d'obtenir une première couche qui soit facilement déposable à chaud (par exemple à 200°C) sur la couche diénique déjà cuite, sans perdre la bonne adhésion observée ci-dessus et permettant notamment d'obtenir une étanchéité et une hystérèse satisfaisante.

### V-3-3. Exemple de stratifiés selon l'invention

Un stratifié selon l'invention (A5/B3), incluant dans la première couche le système plastifiant précédemment décrit a été préparé et testé, en comparaison avec des témoins ne possédant pas le système plastifiant spécifique à l'invention (A2/B3, A3/B3 et A4/B3). Les résultats sont présentés dans le tableau 4.

**Tableau 4**

| Stratifié multicouches | A2/B3 | A3/B3 | A4/B3 | A5/B3 |
|---|---|---|---|---|
| Performance viscosité à 200°C | 100 | 145 | 120 | 145 |
| Performance hystérèse | 100 | 185 | 46 | 130 |
| Performance perméabilité | 100 | 78 | 129 | 124 |
| Performance adhésion | 100 | 78 | 105 | 104 |

Les résultats présentés au tableau 4 montrent que seul le système plastifiant selon l'invention (stratifié A5/B3) permet d'améliorer à la fois la viscosité à 200°C, l'hystérèse et la perméabilité du stratifié, tout en conservant une bonne adhésion entre les deux couches. En effet, l'utilisation d'huile seulement pénalise les performances de perméabilité et d'adhésion, tandis que l'utilisation de résine seulement pénalise la performance en hystérèse.

En conclusion, par rapport aux stratifiés connus utilisant une couche d'adhésion pour assembler une couche étanche thermoplastique et une couche diénique, l'invention permet de s'affranchir de la couche d'adhésion, notamment en insérant une fraction d'élastomère TPS dans la couche diénique, tout en permettant d'avoir un niveau de viscosité facilitant l'assemblage après la cuisson de la couche diénique et en favorisant de plus les performances de perméabilité et d'hystérèse.

## Revendications

1. Stratifié élastomérique étanche pour pneumatique, ledit stratifié comportant au moins deux couches superposées d'élastomère :
∘ une première couche, constituée d'une composition à base d'au moins un élastomère thermoplastique à blocs polystyrène et polyisobutylène, le taux d'élastomère thermoplastique à blocs polystyrène et polyisobutylène étant compris dans un domaine allant de plus de 50 à 100 pce (parties en poids pour 100 parties en poids d'élastomère), et d'un système plastifiant comprenant de 1 à 40 pce d'une huile plastifiante et de 1 à 40 pce d'une résine hydrocarbonée, le taux total de plastifiant étant compris dans un domaine allant de 2 à 70 pce ;
∘ une deuxième couche, constituée d'une composition à base d'au moins un élastomère diénique, le taux d'élastomère diénique étant compris dans un domaine allant de plus de 50 à 95 pce, et d'au moins un élastomère thermoplastique styrénique (TPS), le taux d'élastomère thermoplastique styrénique étant compris dans un domaine allant de 5 à moins de 50 pce.

2. Stratifié selon la revendication 1, dans lequel le copolymère à blocs polystyrène et polyisobutylène de la première couche est un copolymère styrène/ isobutylène/ styrène (SIBS).

3. Stratifié selon la revendication 1, dans lequel le taux d'élastomère thermoplastique à blocs polystyrène et polyisobutylène dans la composition de la première couche est compris dans un domaine allant de 80 à 100 pce.

4. Stratifié selon l'une quelconque des revendications précédentes, dans lequel le système plastifiant de la première couche comprend de 2 à 30 pce, et de préférence de 5 à 20 pce d'une huile plastifiante.

5. Stratifié selon l'une quelconque des revendications précédentes, dans lequel l'huile plastifiante de la première couche est une huile polybutène, et préférentiellement une huile polyisobutylène.

6. Stratifié selon l'une quelconque des revendications précédentes, dans lequel le système plastifiant de la première couche comprend de 2 à 30 pce, et de préférence de 5 à 20 pce de résine hydrocarbonée.

7. Stratifié selon l'une quelconque des revendications précédentes, dans lequel la résine hydrocarbonée de la première couche est choisie dans le groupe constitué par les résines d'homopolymère ou copolymère de cyclopentadiène ou dicyclopentadiène, les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines.

8. Stratifié selon la revendication 7, dans lequel la résine hydrocarbonée de la première couche est une résine de copolymère styrène/ alphaméthylstyrène.

9. Stratifié selon l'une quelconque des revendications précédentes, dans lequel la première couche comprend en outre une charge lamellaire.

10. Stratifié selon l'une quelconque des revendications précédentes, dans lequel la première couche ne contient pas de système de réticulation.

11. Stratifié selon l'une quelconque des revendications précédentes, dans lequel les blocs élastomères des élastomères thermoplastiques styréniques (TPS) de la deuxième couche sont choisis parmi les élastomères ayant une température de transition vitreuse inférieure à 25°C.

12. Stratifié selon l'une quelconque des revendications 1 à 11, dans lequel les élastomères thermoplastiques styréniques (TPS) de la deuxième couche comportent entre 5 et 50% en masse de styrène.

13. Stratifié selon l'une des revendications précédentes dans lequel l'élastomère diénique de la deuxième couche est choisi dans le groupe constitué par les élastomères diéniques essentiellement insaturés, et les mélanges de ces élastomères.

14. Stratifié selon l'une quelconque des revendications précédentes, dans lequel la deuxième couche comprend une charge renforçante.

15. Pneumatique comportant un stratifié selon l'une quelconque des revendications précédentes.

## Patentansprüche

1. Dichtes mehrschichtiges Laminat für einen Reifen, wobei das Laminat mindestens zwei übereinanderliegende Schichten aus Elastomer umfasst:
∘ eine erste Schicht aus einer Zusammensetzung auf Basis von mindestens einem thermoplastischen Elastomer mit Polystyrol- und Polyisobutylen-Blöcken, wobei der Gehalt des thermoplastischen Elastomers mit Polystyrol- und Polyisobutylen-Blöcken in einem Bereich von mehr als 50 bis 100 phe (Gewichtsteile pro 100 Gewichtsteile Elastomer) liegt, und einem Weichmachersystem, das 1 bis 40 phe eines Weichmacheröls und 1 bis 40 phe eines Kohlenwasserstoffharzes umfasst, wobei der Gesamtgehalt an Weichmacher in einem Bereich von 2 bis 70 phe liegt;
∘ eine zweite Schicht aus einer Zusammensetzung auf Basis von mindestens einem Dien-Elastomer, wobei der Gehalt an Dien-Elastomer in einem Bereich von mehr als 50 bis 95 phe liegt, und mindestens einem thermoplastischen Styrolelastomer (TPS), wobei der Gehalt an thermoplastischem Styrolelastomer in einem Bereich von 5 bis weniger als 50 phe liegt.

2. Laminat nach Anspruch 1, wobei es sich bei dem Blockcopolymer mit Polystyrol- und Polyisobutylen-Blöcken der ersten Schicht um ein Styrol/Iso-butylen/Styrol-Copolymer (SIBS-Copolymer) handelt.

3. Laminat nach Anspruch 1, wobei der Gehalt an thermoplastischem Elastomer mit Polystyrol- und Polyisobutylen-Blöcken in der Zusammensetzung der ersten Schicht in einem Bereich von 80 bis 100 phe liegt.

4. Laminat nach einem der vorhergehenden Ansprüche, wobei das Weichmachersystem der ersten Schicht 2 bis 30 phe und vorzugsweise 5 bis 20 phe eines Weichmacheröls umfasst.

5. Laminat nach einem der vorhergehenden Ansprüche, wobei es sich bei dem Weichmacheröl der ersten Schicht um ein Polybutenöl und vorzugsweise ein Polyisobutylenöl handelt.

6. Laminat nach einem der vorhergehenden Ansprüche, wobei das Weichmachersystem der ersten Schicht 2 bis 30 phe und vorzugsweise 5 bis 20 phe eines Kohlenwasserstoffharzes umfasst.

7. Laminat nach einem der vorhergehenden Ansprüche, wobei das Kohlenwasserstoffharz der ersten Schicht aus der Gruppe bestehend aus Homopolymer- oder Copolymerharzen von Cyclopentadien oder Dicyclopentadien, Terpen-Homopolymer- oder -Copolymer-harzen, Terpen-Phenol-Homopolymer- oder - Copolymerharzen, C5-Schnitt-Homopolymer- oder - Copolymerharzen, C9-Schnitt-Homopolymer- oder - Copolymerharzen, alpha-Methylstryol-Homopolymer- oder -Copolymerharzen und Mischungen dieser Harze ausgewählt ist.

8. Laminat nach Anspruch 7, wobei es sich bei dem Kohlenwasserstoffharz der ersten Schicht um ein Styrol/alpha-Methylstyrol-Copolymerharz handelt.

9. Laminat nach einem der vorhergehenden Ansprüche, wobei die erste Schicht außerdem einen plättchenförmigen Füllstoff umfasst.

10. Laminat nach einem der vorhergehenden Ansprüche, wobei die erste Schicht kein Vernetzungssystem enthält.

11. Laminat nach einem der vorhergehenden Ansprüche, wobei die Elastomerblöcke der thermoplastischen Styrolelastomere (TPS) der zweiten Schicht aus Elastomeren mit einer Glasübergangstemperatur von weniger als 25°C ausgewählt sind.

12. Laminat nach einem der Ansprüche 1 bis 11, wobei die thermoplastischen Styrolelastomere (TPS) der zweiten Schicht zwischen 5 und 50 Gew.-% Styrol umfassen.

13. Laminat nach einem der vorhergehenden Ansprüche, wobei das Dien-Elastomer der zweiten Schicht aus der Gruppe bestehend aus im Wesentlichen ungesättigten Dien-Elastomeren und Mischungen dieser Elastomere ausgewählt ist.

14. Laminat nach einem der vorhergehenden Ansprüche, wobei die zweite Schicht einen verstärkenden Füllstoff umfasst.

15. Reifen, umfassend ein Laminat nach einem der vorhergehenden Ansprüche.

## Claims

1. Airtight elastomeric laminate for tyres, the said laminate comprising at least two superimposed layers of elastomer:
∘ a first layer, composed of a composition based on at least one thermoplastic elastomer having polystyrene and polyisobutylene blocks, the content of thermoplastic elastomer having polystyrene and polyisobutylene blocks being within a range extending from more than 50 to 100 phr (parts by weight per 100 parts by weight of elastomer), and on a plasticizing system comprising from 1 to 40 phr of a plasticizing oil and from 1 to 40 phr of a hydrocarbon resin, the total content of plasticizer being within a range extending from 2 to 70 phr;
∘ a second layer, composed of a composition based on at least one diene elastomer, the content of diene elastomer being within a range extending from more than 50 to 95 phr, and on at least one thermoplastic styrene elastomer (TPS), the content of thermoplastic styrene elastomer being within a range extending from 5 to less than 50 phr.

2. Laminate according to Claim 1, in which the copolymer having polystyrene and polyisobutylene blocks of the first layer is a styrene/isobutylene/styrene (SIBS) copolymer.

3. Laminate according to Claim 1, in which the content of thermoplastic elastomer having polystyrene and polyisobutylene blocks in the composition of the first layer is within a range extending from 80 to 100 phr.

4. Laminate according to any one of the preceding claims, in which the plasticizing system of the first layer comprises from 2 to 30 phr and preferably from 5 to 20 phr of a plasticizing oil.

5. Laminate according to any one of the preceding claims, in which the plasticizing oil of the first layer is a polybutene oil and preferably a polyisobutylene oil.

6. Laminate according to any one of the preceding claims, in which the plasticizing system of the first layer comprises from 2 to 30 phr and preferably from 5 to 20 phr of hydrocarbon resin.

7. Laminate according to any one of the preceding claims, in which the hydrocarbon resin of the first layer is selected from the group consisting of cyclopentadiene or dicyclopentadiene homopolymer or copolymer resins, terpene homopolymer or copolymer resins, terpene/phenol homopolymer or copolymer resins, C₅ fraction homopolymer or copolymer resins, C₉ fraction homopolymer or copolymer resins, α-methylstyrene homopolymer or copolymer resins and the mixtures of these resins.

8. Laminate according to Claim 7, in which the hydrocarbon resin of the first layer is a styrene/a-methylstyrene copolymer resin.

9. Laminate according to any one of the preceding claims, in which the first layer additionally comprises a platy filler.

10. Laminate according to any one of the preceding claims, in which the first layer does not comprise a crosslinking system.

11. Laminate according to any one of the preceding claims, in which the elastomer blocks of the thermoplastic styrene elastomers (TPSs) of the second layer are chosen from elastomers having a glass transition temperature of less than 25°C.

12. Laminate according to any one of Claims 1 to 11, in which the thermoplastic styrene elastomers (TPSs) of the second layer comprise between 5% and 50% by weight of styrene.

13. Laminate according to one of the preceding claims, in which the diene elastomer of the second layer is selected from the group consisting of essentially unsaturated diene elastomers and the mixtures of these elastomers.

14. Laminate according to any one of the preceding claims, in which the second layer comprises a reinforcing filler.

15. Tyre comprising a laminate according to any one of the preceding claims.
